# FASCICULE DE BREVET EUROPEEN

(11) **EP 1 242 170 B1**
(45) Date de publication et mention de la délivrance du brevet: **06.04.2005**
(21) Numéro de dépôt: 00991817.8
(22) Date de dépôt: 29.12.2000
(51) Int. Cl.: B01D 67/00, B01D 69/02, B26F 1/31, B23K 26/00

(54) **PROCEDE DE CREATION DE PORES DANS UN MATERIAU POLYMERE**
VERFAHREN ZUR HERSTELLUNG VON POREN IN EINEM POLYMEREN MATERIAL
METHOD FOR CREATING PORES IN A POLYMER MATERIAL

(30) Priorité: 29.12.1999 FR 9916655
(43) Date de publication de la demande: 25.09.2002
(73) Titulaire: UNIVERSITE CATHOLIQUE DE LOUVAIN, 1348 Louvain la Neuve (BE)
(72) Inventeur: FERAIN, Etienne, B-7050 Masnuy Saint Jean (BE); LEGRAS, Roger, B-4280 Lens-Saint-Remy (BE); OUNADJELA, Kamel, F-94250 Gentilly (FR)
(74) Mandataire: Geismar, Thierry
(86) Numéro de dépôt international: PCT/EP2000/013406
(87) Numéro de publication internationale: WO 2001/049402

(56) Documents cités:
- WO-A-87/05850
- WO-A-98/30317
- US-A- 3 713 921
- US-A- 3 852 134
- US-A- 5 234 538

## Description

L'invention se rapporte à un procédé de création de pores dans un matériau polymère en feuilles ou une couche polymère telle qu'un film mince d'épaisseur égale à une centaine de nanomètres, préalablement déposée sur un support métallique.

L'invention se rapporte plus particulièrement à un procédé de création de pores de taille nanométrique à micrométrique dans un matériau polymère tel que du polycarbonate en feuilles ou tout autre matériau équivalent ainsi qu'à l'utilisation de telles feuilles microporeuses, notamment pour la réalisation de membranes de filtration ou pour la connexion de filaments à un circuit électronique préalablement écrit sur un support.

L'invention se rapporte également aux membranes microporeuses obtenues par ledit procédé, les membranes pouvant présenter des zones de porosité de l'ordre de 10µm de diamètre.

On connaît déjà, dans l'art antérieur, différents procédés de création de pores de faible section dans des feuilles de matériau polymère, par exemple en vue de l'élaboration de membranes microporeuses pour l'épuration ou le filtrage de fluides industriels ou biologiques, ou pour le traitement des eaux.

Ces procédés peuvent être regroupés selon trois grands types :
- un premier type de procédé, mécanique, comprenant au moins une étape d'estampage, tel que décrit par exemple dans le document US-A- 4 652 412 ;
- un deuxième type de procédé, comprenant au moins une irradiation au laser infra rouge CO₂ ou NdYAG, ou au laser pulsé, tels que décrit par exemple dans les documents US-A- 4 923 608, US-A- 3 742 182, WO-A- 98 30317 ;
- un troisième type de procédé, comprenant au moins une irradiation ionique suivie d'une attaque chimique.

Le procédé selon l'invention de création de pores dans un matériau tel que polycarbonate en feuille appartient au troisième type général présenté ci-dessus.

Pour ce type de procédé de création de pores, en vue de la réalisation de membranes de filtration, on peut se reporter par exemple aux documents suivants : DE-A- 4 319 610, US-A- 5 234 538, US-A- 3 713 921.

Le document US-A- 4 956 219, issu de la demanderesse, décrit un procédé de création de pores dans un matériau choisi parmi le groupe comprenant les polyesters saturés tels que polytéréphtalate d'éthylène, les polyesters d'acide carbonique tels que polycarbonate élaboré à partir de bis-phénol A (Bis (hydroxy-4 phénol)-2,2 propane), les polyéthers aromatiques, les polysulfones, les polyoléfines, les acétates de cellulose et nitrates de cellulose.

Le matériau est bombardé par un faisceau d'ions issus de préférence de gaz rares tel que l'argon, d'énergie voisine de 2MeV par nucléon, la densité d'ions traversant le film polymère étant comprise entre 10⁴ et 10¹³ ions par centimètre carré.

De tels faisceaux peuvent être obtenus par des accélérateurs de particules tels que cyclotrons à secteurs séparés.

Le matériau se présente sous forme d'une bande défilant sensiblement perpendiculairement au faisceau d'ions, l'épaisseur de la bande étant de l'ordre de quelques microns à 100 microns, la largeur de la bande étant comprise entre 5 et 150 centimètres.

Par déflexion magnétique, le faisceau d'ions effectue un balayage sinusoïdal, chaque portion de la bande étant bombardée à plusieurs reprises de sorte qu'une densité homogène de pores est obtenue sur toute la bande de matériau traitée.

Après bombardement, la bande de matériau est soumise éventuellement à un rayonnement ultra violet (UV).

Après ce traitement UV ou directement après bombardement ionique, un traitement chimique est effectué dans une solution corrosive en présence d'un solvant organique.

Ainsi, par exemple, la bande de matériau est plongée dans une solution de soude caustique en présence de méthanol, d'éthanol ou d'isopropanol.

Le bombardement ionique et/ou le traitement chimique peuvent être réalisés en continu, éventuellement l'un directement à la suite de l'autre, la bande de matériau ayant défilé en regard du faisceau étant entraînée en continu dans la solution corrosive.

Après neutralisation, rinçage et séchage, une bande continue de matériau polymère microporeux est obtenue.

Le document US-A- 3 852 134 décrit un procédé de bombardement ionique de film en polycarbonate de moins de vingt microns d'épaisseur, suivi d'une exposition à un rayonnement de longueur d'onde inférieure à 4000 Angströms, sous oxygène, avant première attaque chimique, recuit et seconde attaque chimique en vue d'obtenir des pores de diamètres compris entre 1000 et 100 000 Angstrôms.

Les procédés d'attaque préférentielle selon des directions définies par des défauts de structure moléculaire issus d'un bombardement ionique permettent d'élaborer des membranes filtrantes de qualité supérieure à celles des membranes issues d'autres procédés tels qu'estampage ou traitement laser.
Toutefois, le contrôle de la densité, de la forme et de la taille des pores obtenus reste délicat.

Ainsi, par exemple, il existe une probabilité qu'un ou plusieurs pores traversent complètement la membrane ce qui, dans certaines applications, peut être préjudiciable.

Pour diminuer ce risque, un procédé de bombardement sur les deux faces de la membrane est proposé dans le document US-A- 4 855 049. Ce procédé conduit toutefois à un comportement hydromécanique défavorable dans certains cas, du fait de la grande tortuosité obtenue pour les passages de fluide.

Il a été constaté par ailleurs que les pores sont de diamètre variable de la surface vers le coeur de la membrane, présentant ainsi une forme de « cigares » (pour les membranes en polycarbonate, voir Schönenberger *et. Al,* J.Phys.Chem. B101, p. 5497-5505, 1997).

Ceci gêne notamment une bonne prédiction des propriétés de ces membranes au seul vu de leur surface, par exemple au microscope électronique à balayage.

L'origine de cette forme des pores reste discutée.

Le document US-A- 3 713 921 présente l'emploi d'un surfactant ajouté au réactif d'attaque pour atténuer ces variations de forme et de dimension transversale des pores.

Certains auteurs invoquent une influence de l'épaisseur de la membrane et un contrôle imparfait des conditions d'attaque pour expliquer la forme en « cigares » des pores.

L'invention se rapporte à un procédé de création de pores dans un matériau polymère en feuille, tel que polycarbonate ou tout autre matériau équivalent, ledit procédé permettant l'obtention de zones poreuses de tailles et formes contrôlables, ces zones étant réparties selon des densités et des localisations également contrôlables.

Selon un mode de réalisation, le procédé permet en outre, au sein desdites zones, la formation de pores de forme générale cylindrique, sans variation notable de diamètre moyen de ces pores dans l'épaisseur des feuilles de matériau polymère traitées.

L'invention concerne également les membranes microporeuses élaborées à partir desdites feuilles de matériau polymère traitées.

L'invention se rapporte à un procédé de création de pores de taille nanométrique à micrométrique dans un film de matériau polymère pouvant être supporté, comprenant, dans cet ordre, les étapes suivantes :
- un bombardement ionique du film, de façon à former des traces dans le film, et produisant un film bombardé ;
- une irradiation sélective du film assurant une activation sélective des traces ;
- une attaque chimique du film, de façon à créer des pores dans le film, et produisant un film microporeux ;
le procédé comprenant, en outre, une étape de traitement thermique global du film bombardé, assurant une désactivation partielle des traces formées dans le film bombardé, ladite étape de traitement thermique global ayant lieu après le bombardement ionique et avant l'attaque chimique.

Dans un mode de réalisation, le traitement thermique global et l'irradiation sélective du film bombardé sont effectués simuttanément.

Dans un autre mode de réalisation, l'irradiation sélective est effectuée après le traitement thermique du film bombardé.

Dans un autre mode de réalisation, l'irradiation sélective est effectuée à l'aide d'une source UV et au travers d'un masque.

Dans un autre mode de réalisation, l'irradiation sélective est effectuée à l'aide d'un faisceau laser UV.

Selon une réalisation particulière, une étape de pré-attaque du film est effectuée préalablement au bombardement ionique, cette pré-attaque réduisant l'épaisseur dudit film.

Le matériau polymère est choisi parmi le groupe comprenant les polyesters saturés tels que polytéréphtalate d'éthylène, les polyesters d'acide carbonique tels que polycarbonate élaboré à partir de bis-phénol A (Bis (hydroxy-4 phényl)-2,2 propane), les polyéthers aromatiques, les polysulfones, les polyoléfines, les acétates de cellulose et nitrates de cellulose.

Le film de matériau polymère présente initialement, et notamment avant pré-attaque éventuelle, une épaisseur comprise entre quelques microns et une centaine de microns.

La pré-attaqué, est conduite, jusqu'à l'ablation d'une épaisseur comprise entre 0,5 microns et 3 microns environ sur chaque face dudit film.

Selon une réalisation particulière, le film est réalisé en polycarbonate amorphe et présente une épaisseur de 25 microns environ avant pré-attaque.

Selon une autre réalisation particulière, le film est réalisé en un polycarbonate cristallin et présente une épaisseur de 10 microns environ avant pré-attaque.

Le bombardement ionique est effectué par un faisceau d'ions issus de préférence de gaz rares tel que l'argon, d'énergie voisine de 2MeV par nucléon, le faisceau ayant une intensité comprise entre 10⁶ et 10¹³ ions par seconde.

Dans un mode de réalisation, l'attaque chimique est dite lente et est effectuée dans un bain contenant de la soude caustique à 0,5N en solution aqueuse, à une température d'environ 70°C, durant environ 260 mn.

Dans un autre mode de réalisation, l'attaque chimique est dite rapide et est effectuée dans un bain contenant de la soude caustique à 2N, en solution aqueuse, à une température d'environ 70°C, durant environ 30 mn.

Le bain d'attaque chimique comprend, dans une réalisation, un solvant organique choisi parmi le groupe comprenant le méthanol, l'éthanol, l'isopropanol.

L'attaque chimique est effectuée en présence d'un surfactant.

Les films microporeux obtenus après attaque chimique sont lavés jusqu'à neutralisation du pH, rincés et séchés.

Le lavage des films microporeux est réalisé dans une solution aqueuse d'acide acétique à 15% environ, à une température d'environ 70°C durant environ 15 minutes ; puis dans de l'eau déminéralisée, à une température d'environ 70°C, durant environ 15 minutes et plus, jusqu'à obtention d'un pH neutre.

Le procédé permettant la création de pores décrit ci-dessus est effectué en continu.

Le procédé permet d'obtenir un film microporeux en matériau polymère utilisé comme matrice en vue de l'élaboration de filaments micrométriques en métal ou en polymère.

D'autres objets et avantages de l'invention apparaîtront au cours de la description suivante de modes de réalisation, description qui va être effectuée en se référant aux dessins annexés dans lesquels:
- la figure 1 est un diagramme schématique représentant les étapes successives d'un procédé de création de pores dans un matériau polymère en feuille, selon un premier mode de réalisation de l'invention ;
- la figure 2 est un diagramme schématique représentant les étapes successives d'un procédé de fabrication de filaments métalliques, procédé de fabrication utilisant le matériau polymère en feuille traité conformément au procédé de création de pores tel que schématisé en figure 1 ;
- la figure 3 est un diagramme schématique représentant les étapes successives d'un procédé de fabrication de filaments en polymère, procédé de fabrication utilisant le matériau polymère en feuille traité conformément au procédé de création de pores tel que schématisé en figure 1.

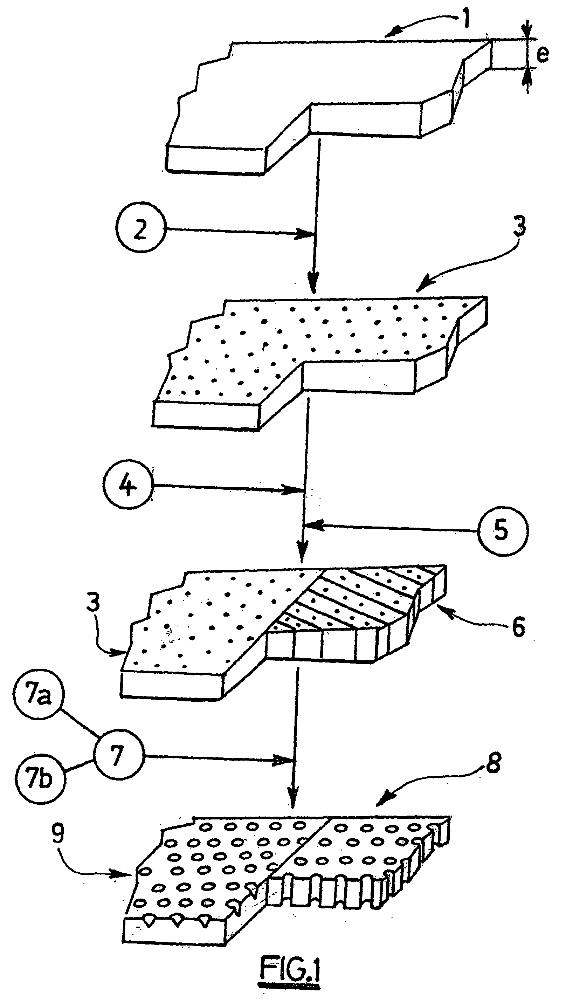

On se rapporte tout d'abord à la figure 1.

Le procédé de création de pores dans un film polymère initial 1, tel que schématisé en figure 1, comprend quatre étapes successives :
- un bombardement ionique 2 du film 1, produisant un film bombardé 3 ;
- un traitement thermique global 4 du film bombardé 3 ;
- une irradiation sélective 5 du film bombardé 3 produisant un film irradié 6 ;
- une attaque chimique 7 du film irradié 6.

Le film polymère initial 1 peut être élaboré en un matériau choisi parmi le groupe comprenant les polyesters saturés tels que polytéréphtalate d'éthylène, les polyesters d'acide carbonique tels que polycarbonate élaboré à partir de bis-phénol A (Bis (hydroxy-4 phényl)-2,2 propane), les polyéthers aromatiques, les polysulfones, les polyoléfines, les acétates de cellulose et nitrates de cellulose.

Dans la suite de la description, seuls seront décrits les résultats obtenus avec du polycarbonate.

Deux grades de polycarbonate élaborés à partir de bis-phénol A seront considérés : un polycarbonate cristallin (dit PCc par la suite, à fins de simplification) et un polycarbonate amorphe (dit PCa par la suite).

Comme PCc, un film de 10 microns d'épaisseur, vendu sous la marque Makrofol™ par la société BAYER est utilisé dans les exemples ci-dessous détaillés. Ce film Makrofal™ est élaboré par moulage, cristallisation et étirement longitudinal.

Comme PCa, un film de 25 microns d'épaisseur, vendu sous la marque Lexan™ par la socité GENERAL ELECTRIC est utilisé dans les exemples ci-dessous détaillés. Ce film Lexan™ comprend des cristallites de taille si faible qu'il est d'une très haute transparence en lumière naturelle.

Dans certains modes de réalisation particuliers, une pré-attaque du film est réalisée avant bombardement ionique.

Le bombardement ionique 2 est effectué, dans un mode de réalisation, par un faisceau d'ions issus de préférence de gaz rares tel que l'argon, d'énergie voisine de 2MeV par nucléon, le faisceau ayant une intensité comprise entre 10⁶ et 10¹³ ions par seconde.

De tels faisceaux peuvent être obtenus par des accélérateurs de particules tels que cyclotrons à secteurs séparés.

Le film à bombarder, pré-attaqué ou non , se présente, dans un mode de réalisation, sous forme d'une bande défilant sensiblement perpendiculairement au faisceau d'ions, l'épaisseur (e) de la bande étant de l'ordre de quelques centaines de nm à 100 microns, la largeur de la bande étant comprise entre 5 et 150 centimètres.

Dans un autre mode de réalisation, le film polymère, d'une épaisseur (e) pouvant varier de quelques nanomètres à quelques centaines de nanomètres, est déposé sur un support (non représenté).

Par déflexion magnétique ou tout autre procédé équivalent, le faisceau d'ions effectue un balayage sinusoïdal, chaque portion de la bande étant irradiée à plusieurs reprises de sorte qu'une densité homogène de pores est obtenue sur toute la bande de film bombardé.

Après son refroidissement, le film bombardé 3 est soumis à :
- un traitement thermique global 4, de sorte que les défauts de structure ou « traces » formés dans le film polymère lors du bombardement ionique soient moins sensibles à l'attaque chimique ;
- une irradiation sélective 5 du film bombardé 3 traité thermiquement réactive certaines traces et les rend plus sensibles à l'attaque chimique 7 ultérieure ;
- une attaque chimique 7, effectuée dans une solution corrosive en présence d'un solvant organique.

Le traitement thermique 4 est effectué à une température comprise entre la température ambiante et 200°C environ, pendant un temps inférieur à quelques dizaines de minutes.

Lorsque le film polymère est en polycarbonate, le traitement thermique 4 est effectué à 150°C environ.

L'irradiation 5 peut être effectuée pendant un temps très court, par l'emploi d'un faisceau laser ou beaucoup plus long, de l'ordre de plusieurs heures pour une source d'énergie moins intense.

Dans une réalisation, l'irradiation 5 est effectuée en employant une longueur d'onde de l'ordre de 360nm, pour une puissance pouvant atteindre une dizaine de millijoule par micromètre carré.

Ainsi, par exemple, le film irradié sélectivement 6 est plongé dans une solution de soude caustique en présence de méthanol, d'éthanol ou d'isopropanol.

Les étapes de bombardement ionique 2, de traitement thermique 4, d'irradiation sélective 5 et d'attaque chimique 7, peuvent être réalisées en continu, éventuellement l'une directement à la suite de l'autre.

Après neutralisation, rinçage et séchage, un film continu de matériau polymère microporeux 8 est obtenu.

La membrane 9, non-poreuse, est issue de la membrane 3 ayant subi le traitement thermique 4 puis l'attaque chimique 7, mais n'ayant pas subi d'irradiation 5.

Dans une variante de réalisation de l'attaque chimique 7, un tensioactif est ajouté à la solution de soude pour améliorer le mouillage du film irradié 6 durant l'attaque 7.

Ainsi qu'il a été dit plus haut, la mise en oeuvre conventionnelle des procédés d'attaque chimique 7 de films polymères ayant subit un bombardement ionique 2 conduit à la formation de pores de diamètre variable d'un bord à l'autre de ces films.

Les inventeurs ont mené des investigations poussées afin tant de proposer une explication à cette forme irrégulière des pores que de proposer un procédé de fabrication de films polymères microporeux dont les pores présentent une forme générale cylindrique.

Les résultats expérimentaux obtenus vont être présentés ci-dessous en références à des modes de réalisation de l'invention.

Un film initial de PCc, de marque Makrofol™, de 10 microns d'épaisseur (e) et un film initial de PCa de marque Lexan™ ont été soumis chacun à une pré-attaque légère Préal et une pré-attaque intense Préai, de sorte à enlever une épaisseur de 0,5 microns et 2,0 microns sur chaque face des films, respectivement.

Les épaisseurs enlevées ont été mesurées par gravimétrie.

Les films prétraités ont été ensuite soumis à un bombardement ionique 2, au Centre de Recherche du Cyclotron, à Louvain-la-Neuve.

Des ions Ar⁹⁺ ont été utilisés, sous une tension d'accélération de 5,5MeV/amu.

Les films bombardés 3 ont ensuite été soumis à un traitement thermique 4 (150°C pendant 15 mn) et à une irradiation 5 aux ultraviolets au travers d'un masque (non représenté).

Les films irradiés 6 ont ensuite été soumis à une attaque chimique selon deux modalités :
- une attaque chimique 7a dite « lente », dans un bain contenant de la soude caustique à 0,5N en solution aqueuse, à une température d'environ 70°C durant environ 260mn ;
- une attaque chimique 7b dite « rapide », dans un bain contenant de la soude caustique à 2N, en solution aqueuse, à une température d'environ 70°C, durant environ 30 mn.

Dans les deux cas d'attaque chimique 7a, 7b, un surfactant à été ajouté à la solution pour augmenter le mouillage du film irradié 6 durant l'attaque.

Après l'attaque chimique 7a, 7b, les films microporeux 8 obtenus ont été lavés :
- dans une solution aqueuse d'acide acétique à environ 15%, à une température d'environ 70°C, durant environ 15 minutes ;
- puis dans de l'eau déminéralisée, à une température d'environ 70°C, durant environ 15 minutes et plus, jusqu'à obtention d'un pH neutre.

Les films ont ensuite été revêtus de polyvinylpyrrolidone ou PVP pour accroître leur caractère hydrophile, puis séchés à l'air chaud.

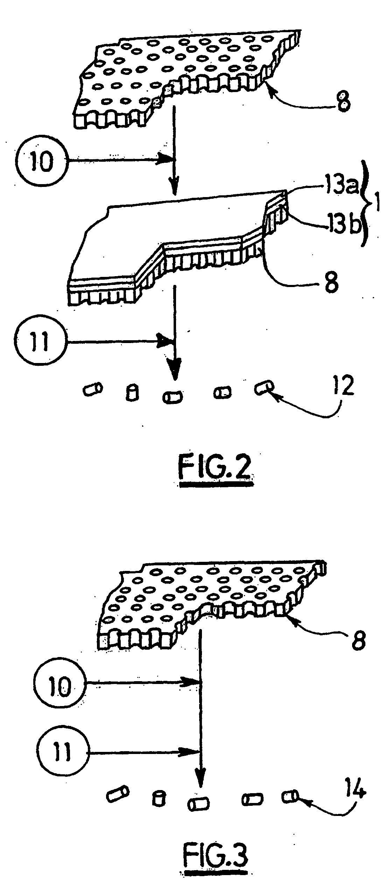

On se rapporte maintenant aux figures 2 et 3.

Les films microporeux 8 ont ensuite été soumis à une électrolyse 10 effectuée dans une cellule électrochimique à trois électrodes, à température ambiante, telle qu'une cellule de galvanoplastie, à compartiment en Téflon™ avec une contre-électrode en platine et une électrode de référence au calomel.

Une bi-couche métallique 13, servant d'électrodes, est appliquée sur l'une des faces du film microporeux 8.

Cette bi-couche 13 comprend :
- une première couche 13b, d'adhésion, de chrome, de 10 à 20nm d'épaisseur, directement appliquée sur l'une des faces du film microporeux 8 ;
- une seconde couche 13a, d'or, de 500nm à 1micron d'épaisseur, appliquée sur la première couche 13b et en contact direct avec l'atmosphère.

L'électrolyse 10 est effectuée, par exemple :
- avec une solution comprenant 50g/l de CoSO₄ et 30g/l de H₃BO₃ , sous une différence de potentiel de -0,1V, pour la réalisation de filaments métalliques 12 ;
- avec une solution comprenant 0,1 M de pyrrole et 0,1 M de LiClO₄ , sous une différence de potentiel de +0,8V, pour la réalisation de filaments en polymère 14.

Au terme de la galvanoplastie, la matrice en polycarbonate des films microporeux a été dissoute lors de l'étape 11, dans du dichlorométhane.

Les filaments 12 ou 14 obtenus peuvent être filtrés grâce par exemple à une membrane en argent.

Les films polymères microporeux 8 et les filaments 12 ou 14 obtenus ont été observés au microscope éléctronique à effet de champ (DSM 982 Gemini de la société LEO).

Des images de résolution satisfaisante ont été obtenues pour des grandissements allant jusqu'à 200 000, sous tension d'accélération de 400V, sans dépôt métallique sur les échantillons à observer.

Les paramètres suivants ont été mesurés :
- diamètre moyen des filaments, à mi-longueur (MWD) ;
- diamètre moyen des pores en surface de film microporeux 8 (MPS).

Un étalonnage, grâce à des nanosphères (Calibrated nanosphères™ de la société Duke Scientific Corp.) de diamètre moyen de 30nm a été effectué au préalable.

Par diffraction des rayons X aux petits angles (SAXS), une mesure de la distribution des tailles de pores contenus dans les membranes microporeuses 8 a été effectuée (E.Ferain, R.Legras, Nuclear Instruments and Methods in Physics Research B131, 1997, p.97).

Une valeur moyenne de taille des pores (APS) et un écart type dans la distribution des diamètres de pores ont été déduits de ces mesures d'intensité du faisceau diffracté en fonction de l'angle de diffraction.

L'étude des variations des paramètres MWD, MPS et APS définis ci-dessus, en fonction du temps d'attaque chimique, pour les attaques lentes et rapides d'un film en PCc de type Makrofol™ a montré que :
- les filaments obtenus ont des diamètres MWD supérieurs à la taille des pores en surface des films microporeux 8, que l'attaque chimique soit lente ou rapide et quel que soit le temps d'attaque considéré, les filaments obtenus présentant une forme en cure dents ;
- la différence entre les valeurs de diamètre des filaments MWD et les diamètres MPS des pores en surface de film microporeux 8 est plus faible pour l'attaque chimique lente 7a que pour l'attaque chimique rapide 7b (15nm environ contre 30 nm environ) ;
- les variations des valeurs MPS et MWD, en fonction du temps d'attaque, sont semblables, pour un type d'attaque 7a, 7b donné ;
- les valeurs moyennes de diamètres des pores dans le film PCc, après attaque lente 7a, mesurées par SAXS, sont comprises entre les valeurs de diamètres des filaments à mi-longueur MWD et les valeurs des diamètres des pores en surface de film MPS.

L'étude des variations des paramètres MWD, MPS, en fonction du temps d'attaque, pour une attaque rapide 7b d'un film en PCa de type Lexan™, pour des films ayant subis une pré-attaque légère Préal et pour des films non-préattaqués a montré que :
- une pré-attaque légère Préal réduit l'écart entre les valeurs des diamètres des filaments MWD et les valeurs des diamètres MPS des pores en surface de films microporeux 8, par rapport à un film non pré-attaqué (30nm environ contre 10nm environ) ;
- la pré-attaque ne modifie pas le taux de variation de MPS ou MWD en fonction du temps d'attaque.

L'étude des variations des paramètres MWD, MPS et APS, en fonction du temps d'attaque, pour une attaque lente 7a d'un film en PCa de type Lexan™, pour des films ayant subis une pré-attaque intense Préai a montré que les valeurs des paramètres MWD, MPS et APS sont sensiblement confondues, pour une gamme de temps d'attaque lente 7a donnée, de sorte que les pores formés dans le film peuvent être considérés comme cylindriques.

Les filaments en polypyrrole 14 obtenus après dépôt électrolytique (étape 10) dans les pores d'un film en PCa ayant subit une pré-attaque intense Préai et dissolution (étape 11) de ce film en polycarbonate présentent d'ailleurs une forme cylindrique très régulière.

Les filaments obtenus à partir de PCa présentent une rugosité plus faible que ceux obtenus à partir de PCc.

Cette observation doit probablement être corrélée à la taille plus importante des cristallites dans les films PCc type Makrofol™ que dans les films PCa type Lexan™ utilisés ici, conduisant à des irrégularités dans les chemins d'attaque chimique formant les pores.

Les pores obtenus pour des films en PCa ayant subit une pré-attaque intense Préai présentent des distributions de diamètres moyens à écarts types plus faibles que ceux obtenus pour les pores des films en PCc.

Les pertes d'épaisseur mesurées par gravimétrie, pour des temps d'attaque croissants de films en PCa, PCc et PCa fortement pré-attaqués, non soumis au bombardement ionique 2, sont sensiblement identiques pour les deux premiers microns d'épaisseur des films.

Par conséquent, il ne semble pas exister de couche superficielle plus résistante à l'attaque chimique 7, contrairement aux hypothèses parfois retenues dans la littérature.

Au total, les résultats expérimentaux ci-dessus présentés ont permis d'établir une forte influence positive d'une pré-attaque des films avant bombardement ionique 2, cette pré-attaque permettant l'obtention de pores sensiblement cylindriques et non en « cure-dents » ou en « cigares » comme dans les procédés antérieurs.

Cette influence de la pré-attaque reste d'origine précise indéterminée.

La géométrie des pores obtenus permet la réalisation de nanofilaments ou nanotubes en métal ou en polymère, ces filaments pouvant avoir une surface lisse et une forme cylindrique sur des longueurs variant entre quelques nanomètres et plusieurs dizaines de microns.

De tels nanofilaments ou nanotubes sont de très grand intérêt pour des applications électroniques, optiques ou biomédicales par exemple.

Par ailleurs, le contrôle précis de la porosité tridimensionnelle dans des films en polymères permet la réalisation de filtres très utiles dans les domaines médicaux ou dans le traitement des eaux.

Le procédé de l'invention peut également trouver une application dans le domaine de la connectique.

La mise en place d'une feuille de polymère, par exemple de 100 nanomètres d'épaisseur sur un circuit électronique lui-même placé sur un substrat, et l'application du procédé décrit auparavant audit polymère permet la connection des nanofilaments audit circuit électronique.

## Revendications

1. Procédé de création de pores de taille nanométrique à micrométrique dans un film (1) de matériau polymère pouvant être supporté, comprenant, dans cet ordre, les étapes suivantes :
- un bombardement ionique (2) du film (1), de façon à former des traces dans le film (1), et produisant un film bombardé (3) ;
- une irradiation sélective (5) du film assurant une activation sélective des traces ;
- une attaque chimique (7) du film, de façon à créer des pores dans le film, et produisant un film microporeux (8) ;
**caractérisé en ce qu'**il comprend en outre une étape de traitement thermique global (4) du film bombardé (3), assurant une désactivation partielle des traces formées dans le film bombardé (3), ladite étape de traitement thermique global (4) ayant lieu après le bombardement ionique (2) et avant l'attaque chimique (7).

2. Procédé selon la revendication 1, **caractérisé en ce que** le traitement thermique global (4) et l'irradiation sélective (5) du film bombardé (3) sont effectués simultanément.

3. Procédé selon la revendication 1, **caractérisé en ce que** l'irradiation sélective (5) est effectuée après le traitement thermique (4) du film bombardé (3).

4. Procédé selon l'une quelconque des revendications précédentes, **caractérisé en ce que** l'irradiation sélective (5) est effectuée à l'aide d'une source UV et au travers d'un masque.

5. Procédé selon l'une quelconque des revendications précédentes, **caractérisé en ce que** l'irradiation sélective (5) est effectuée à l'aide d'un faisceau laser UV.

6. Procédé selon l'une quelconque des revendications précédentes, **caractérisé en ce qu'**il comprend une étape de pré-attaque du film, préalablement au bombardement ionique (2) réduisant l'épaisseur (e) dudit film (1).

7. Procédé selon l'une quelconque des revendications 1 à 6, **caractérisé en ce que** le matériau polymère est choisi parmi le groupe comprenant les polyesters saturés tels que polytéréphtatate d'éthylène, les polyesters d'acide carbonique tels que polycarbonate élaboré à partir de bis-phénol A (Bis (hydroxy-4 phényl)-2,2 propane), les polyéthers aromatiques, les polysulfones, les polyoléfines, les acétates de cellulose et nitrates de cellulose.

8. Procédé selon la revendication 7, **caractérisé en ce que** le film de matériau polymère (1) présente initialement et notamment avant pré-attaque éventuelle, une épaisseur (e) comprise entre quelques microns et une centaine de microns.

9. Procédé selon l'une quelconque des revendications 6 à 8, **caractérisé en ce que** la pré-attaque est conduite jusqu'à ablation d'une épaisseur comprise entre 0,5 microns et 3 microns environ sur chaque face dudit film (1).

10. Procédé selon l'une quelconque des revendications 1 à 9, **caractérisé en ce que** le film est réalisé en un polycarbonate amorphe et présente une épaisseur (e) de 25 microns environ avant pré-attaque.

11. Procédé selon l'une quelconque des revendications 1 à 9, **caractérisé en ce que** le film est réalisé en un polycarbonate cristallin et présente une épaisseur (e) de 10 microns environ avant pré-attaque.

12. Procédé selon l'une quelconque des revendications précédentes, **caractérisé en ce que** le bombardement ionique (2) est effectué par un faisceau d'ions issus de préférence de gaz rares tel que l'argon, d'énergie voisine de 2MeV par nucléon, le faisceau ayant une intensité comprise entre 10⁶ et 10¹³ ions par seconde.

13. Procédé selon l'une quelconque des revendications 1 à 12, **caractérisé en ce que** l'attaque chimique (7) est dite lente et est effectuée dans un bain contenant de la soude caustique à 0,5N en solution aqueuse, à une température d'environ 70°C, durant environ 260mn.

14. Procédé selon l'une quelconque des revendications 1 à 12, **caractérisé en ce que** l'attaque chimique (7) est dite rapide et est effectuée dans un bain contenant de la soude caustique à 2N, en solution aqueuse, à une température d'environ 70°C, durant environ 30 mn.

15. Procédé selon la revendication 13 ou 14, **caractérisé en ce que** le bain d'attaque chimique (7) comprend un solvant organique.

16. Procédé selon la revendication 15, **caractérisé en ce que** le solvant organique est choisi parmi le groupe comprenant le méthanol, l'éthanol, l'isopropanol.

17. Procédé selon l'une quelconque des revendications 13 à 16, **caractérisé en ce que** l'attaque chimique (7) est effectuée en présence d'un surfactant.

18. Procédé selon l'une quelconque des revendications 1 à 17, **caractérisé en ce que** les films microporeux (8) obtenus après attaque chimique (7) sont lavés jusqu'à neutralisation du pH, rincés et séchés.

19. Procédé selon la revendication 18, **caractérisé en ce que** le lavage des films microporeux (8) est réalisé dans une solution aqueuse d'acide acétique à 15% environ, à une température d'environ 70°C durant environ 45 minutes ; puis dans de l'eau déminéralisée, à une température d'environ 70°C, durant environ 15 minutes et plus, jusqu'à obtention d'un pH neutre.

20. Procédé selon l'une quelconque des revendications précédentes, **caractérisé en ce qu'**il est effectué en continu.

## Patentansprüche

1. Prozedur der Bildung von Poren von nanometrischer bis mikrometrischer Grösse in einem Film (1) aus Polymermaterial welches getragen werden kann, beinhaltend, in dieser Reihenfolge, die folgenden Etappen:
- ein ionisches Bombardieren (2) des Films (1), auf eine Art und Weise um Spuren in dem Film zu bilden(1 ), und herstellend einen bombardierten Film(3);
- eine selektive Bestrahlung (5) des Films sichernd eine selektive Aktivierung der Spuren;
- ein chemisches Ätzen (7) des Films, auf eine Art und Weise zum Bilden der Poren in dem Film, und herstellend einen mikroporösen Film (8);
charakterisiert dadurch dass er außerdem beinhaltet eine Etappe des globalen thermischen Behandelns (4) des bombardierten Films (3), sichernd eine teilweise Deaktivierung der in dem bombardierten Film gebildeten Spuren (3), besagte Etappe des globalen thermischen Behandelns (4) stattfindend nach dem ionischen Bombardieren (2) und vor dem chemischen Ätzen (7).

2. Prozedur nach Anspruch 1, charakterisiert dadurch dass das globale thermische Behandeln (4) und die selektive Bestrahlung (5) des bombardierten Films (3) gleichzeitig ausgeführt werden.

3. Prozedur nach Anspruch 1, charakterisiert dadurch dass die selektive Bestrahlung (5) ausgeführt wird nach der thermischen Behandlung (4) des bombardierten Films (3).

4. Prozedur nach einem der vorangehenden Ansprüche, charakterisiert dadurch dass die selektive Bestrahlung (5) ausgeführt wird durch eine UV Quelle und durch eine Maske.

5. Prozedur nach einem der vorangehenden Ansprüche, charakterisiert dadurch dass die selektive Bestrahlung (5) ausgeführt wird durch einen UV Laserstrahl.

6. Prozedur nach einem der vorangehenden Ansprüche, charakterisiert dadurch dass sie beinhaltet eine Etappe des Vor-Ätzens des Films, vor dem ionischen Bombardieren (2) verringernd die Dicke (e) besagten Films (1).

7. Prozedur nach einem der Ansprüche 1 bis 6, charakterisiert dadurch dass das Polymermaterial ausgewählt ist aus einer Gruppe beinhaltend die gesättigten Polyester wie Ethylen Polytéréphtatat, Kohlensäurepolyester wie Polycarbonat ausgearbeitet aus Bis-Phenol A (Hydroxy-4Phenyl-2,2Propan), die aromatischen Polyether, die Polysulfone, die Polyolefine, die Zellulose Azetate und Zellulose Nitrate.

8. Prozedur nach Anspruch 7, charakterisiert dadurch dass der Film aus Polymermaterial (1) vorweist Anfangs und besonders vor einem eventuellen Ätzen, eine Dicke (e) enthalten zwischen einigen Mikron und etwa hundert Mikron.

9. Prozedur nach einem der Ansprüche 6 bis 8, charakterisiert dadurch dass die Vor-Ätzung ausgeführt wird bis zur Ablation einer Dicke enthalten zwischen 0,5 Mikron und ungefähr 3 Mikron auf jeder Seite besagten Films (1).

10. Prozedur nach einem der Ansprüche 1 bis 9, charakterisiert dadurch dass der Film aus amorphem Polykarbonat gemacht ist und ungefähr eine Dicke von 25 Mikron aufweist vor dem Vor-Ätzen.

11. Prozedur nach einem der Ansprüche 1 bis 9, charakterisiert dadurch dass der Film aus amorphem Polykarbonat gemacht ist und ungefähr eine Dicke von 10 Mikron aufweist vor dem Vor-Ätzen.

12. Prozedur nach einem der vorangehenden Ansprüche, charakterisiert dadurch dass ionisches Bombardieren (2) ausgeführt wird durch einen Ionenstrahl vorzugsweise hervorgehend aus Edelgasen wie Argon, einer Energie nah bei 2 MeV pro Nukleon, der Strahl habend eine Intensität enthalten zwischen 10⁶ und 10¹³ lonen pro Sekunde.

13. Prozedur nach einem der Ansprüche 1 bis 12, charakterisiert dadurch dass das chemische Ätzen (7) langsam genannt und ausgeführt wird in einem Bad enthaltend Natronlauge mit 0,5 N in wässriger Lösung, bei einer Temperatur von ungefähr 70°C, während ungefähr 260 min.

14. Prozedur nach einem der Ansprüche 1 bis 12, charakterisiert dadurch dass das chemische Ätzen (7) langsam genannt und ausgeführt wird in einem Bad enthaltend Natronlauge mit 2N, in wässriger Lösung, bei einer Temperatur von ungefähr 70°C, während ungefähr 30 min.

15. Prozedur nach einem der Ansprüche 13 oder 14, charakterisiert dadurch dass das chemische Ätzen (7) ein organisches Lösungsmittel beinhaltet.

16. Prozedur nach Anspruch 15, charakterisiert dadurch dass das organische Lösungsmittel ausgewählt ist aus der Gruppe enthaltend Methanol, Ethanol und Isopropanol.

17. Prozedur nach einem der Ansprüche 13 bis 16, charakterisiert dadurch dass das chemische Ätzen (7) ausgeführt wird in Präsenz eines Tensids.

18. Prozedur nach einem der Ansprüche 1 bis 17, charakterisiert dadurch dass die mikroporösen Filme (8) welche erhalten werden nach chemischem Ätzen (7) gewaschen werden bis zur Neutralisierung des pH, gespült und getrocknet.

19. Prozedur nach Anspruch 18, charakterisiert dadurch dass das Waschen der mikroporösen Filme (8) ausgeführt wird in einer wässrigen Lösung von Essigsäure von ungefähr 15%, bei einer Temperatur von ungefähr 70°C während ungefähr 15 Minuten: danach in demineralisiertem Wasser, bei einer Temperatur von ungefähr 70°C, während ungefähr 15 Minuten und mehr, bis zum Erreichen eines neutralen pH.

20. Prozedur nach einem der vorangehenden Ansprüche, charakterisiert dadurch dass sie kontinuierlich ausgeführt wird.

## Claims

1. Process for creation of pores with a size between a few nanometres and a few micrometres within a polymer material film (1) that can be supported, comprising the following steps in the order given below:
- an ionic bombardment (2) of the film (1) so as to form traces in the film (1) and producing a bombarded film (3);
- selective irradiation (5) of the film to achieve selective activation of the traces;
- chemical etching (7) of the film, so as to create pores in the film, and producing a microporous film (8);
**characterised in that** it also includes a global heat treatment step (4) of the bombarded film (3), enabling partial deactivation of traces formed in the bombarded film (3), the said global heat treatment step (4) taking place after the ionic bombardment (2) and before the chemical etching (7).

2. Process according to claim 1, **characterised in that** the global heat treatment (4) and the selective irradiation (5) of the bombarded film (3) are done simultaneously.

3. Process according to claim 1, **characterised in that** the selective irradiation (5) is done after the heat treatment (4) of the bombarded film (3).

4. Process according to any one of the above claims, **characterised in that** the selective irradiation (5) is done using a UV source and through a mask.

5. Process according to any one of the above claims, **characterised in that** the selective irradiation (5) is done using a UV laser beam.

6. Process according to any one of the above claims, **characterised in that** it includes a pre-etching step of the film before the ionic bombardment (2), reducing the thickness (e) of the said film (1).

7. Process according to any one of claims 1 to 6, **characterised in that** the polymer material is chosen from among the group including saturated polyesters such as ethylene polyterephthalate, carbonic acid polyesters such as polycarbonate produced from bis-phenol A (Bis (hydroxy-4 phenyl)-2.2 propane), aromatic polyethers, polysulfones, polyolefins, cellulose acetates and cellulose nitrates.

8. Process according to claim 7, **characterised in that** the thickness (e) of the film of polymer material (1) is initially (before pre-etching if any) between a few microns and a hundred microns.

9. Process according to any one of claims 6 to 8, **characterised in that** the preliminary etching is done until ablation of a thickness between 0.5 microns and about 3 microns on each face of the said film (1).

10. Process according to any one of claims 1 to 9, **characterised in that** the film is made of an amorphous polycarbonate and has a thickness (e) of approximately 25 microns before preliminary etching.

11. Process according to any one of claims 1 to 9, **characterised in that** the film is made of a crystalline polycarbonate and has a thickness (e) of approximately 10 microns before preliminary etching.

12. Process according to any one of the above claims, **characterised in that** the ionic bombardment (2) is made using an ion beam preferably originating from rare gases such as argon, with an energy of about 2 MeV per nucleon, the beam intensity being between 10⁶ and 10¹³ ions per second.

13. Process according to any one of claims 1 to 12, **characterised in that** chemical etching (7) is said to be slow and is done in a bath containing 0.5 N caustic soda in an aqueous solution, at a temperature of about 70°C, for about 260 minutes.

14. Process according to any one of claims 1 to 12, **characterised in that** chemical etching (7) is said to be fast and is done in a bath containing 2 N caustic soda, in an aqueous solution at a temperature of about 70°C lasting about 30 minutes.

15. Process according to claim 13 or 14, **characterised in that** the chemical etching (7) bath comprises an organic solvent.

16. Process according to claim 15, **characterised in that** the organic solvent is chosen from among the group including methanol, ethanol, isopropanol.

17. Process according to any one of claims 13 to 16, **characterised in that** chemical etching (7) is done in the presence of a surfactant.

18. Process according to any one of claims 1 to 17, **characterised in that** the microporous films (8) obtained after chemical etching (7) are washed until the pH is neutralised, and are rinsed and dried.

19. Process according to claim 18, **characterised in that** microporous films (8) are washed in an aqueous solution of about 15% acetic acid, at a temperature of about 70°C for about 15 minutes; and then in demineralised water at a temperature of about 70°C for about 15 minutes and more until a neutral pH is obtained.

20. Process according to any one of the above claims, **characterised in that** it is done continuously.
